# EUROPEAN PATENT APPLICATION

(11) **EP 2 330 786 A1**
(43) Date of publication of application: **08.06.2011**
(21) Application number: 09815558.3
(22) Date of filing: 06.02.2009
(51) Int. Cl.: H04L 29/00

(54) **MEDIA RESOURCE SYSTEM AND MEDIA RESOURCE PROVIDING METHOD**

(30) Priority: 27.09.2008 CN 200810161449
(71) Applicant: ZTE Corporation, Shenzhen, Guangdong 518057 (CN)
(72) Inventor: HUANG, Zheng, Guangdong 518057 (CN); LI, Ming, Guangdong 518057 (CN); DENG, Bing, Guangdong 518057 (CN); JIA, Xia, Guangdong 518057 (CN)
(74) Representative: Guéné, Patrick
(86) International application number: PCT/CN2009/070379
(87) International publication number: WO 2010/034188

(57) **Abstract**

A media resource system and a media resource providing method are provided. The media resource system includes: a service processing module which is used to process the media resource system logically; a user configuration information module which is used to set and/or store the user configuration information associated with the service; a resource storage and management module which is used to store and manage media resources. The personalized media resource playing could be realized in a manner that a variety of services use a suit of media resource system commonly.

## Description

### TECHNICAL FIELD

The present invention relates to the field of communications, particularly to a media resource system and a media resource providing method.

### BACKGROUND

At present, telecom operators are becoming full service operators of integrated networks. When developing new services, the operators attract users largely by offering services with personalized features. Currently, as personalized value-added services, a color ring back tone (CRBT) service and a multimedia ring tone (MRT) service have attracted attention of both telecom operators and users.

The CRBT service is loved by users because it provides personalized ring-back tones. By registering the CRBT service and customizing coloring ring-back tones in advance, users can set their play strategies according to their preferences, e.g. random playing, cyclic playing, playing per calling user's number, playing per specific time periods, etc. When a calling user calls a called user, the calling user can hear personalized coloring ring-back tones according to the play strategy set by the called user. At present, in narrowband networks, there is already mature commercial equipment for providing an audio CRBT service, and in the 3^{rd} generation (3G for short) networks and IP multimedia subsystem (IMS for short) networks, audio/video or combined multimedia CRBT is developing steadily.

The MRT service is a service provided to a called user. In the process of call connection, before a called user answers the call, the called terminal plays a predefined MRT to replace formerly boring ring tones. This service also allows users to set their play strategies.

It can be seen that, the CRBT service and the MRT service combine multimedia ring tones and users' play strategies to provide users with personalized media playing feel. What users consume is media content, which is experienced in the process of call establishing. If this way of experience is extended to an established call, i.e. a calling user and a called user experience the media content after they start to talk with each other, then it is another personalized value-added service (also called as color talk service). Moreover, this way of experience may be merged into message services, multimedia conference services, call waiting, call holding and other supplementary services. For example, in the short message service, when a short message arrives, the short message service provides personalized media playing to prompt users the arrival of the message; in the multimedia conference service, attendees may experience the special background music provided by the conference, when users are invited to attend a conference, the users can experience the atmosphere of the conference in advance through the media played by the conference. All the above can provide users with new experiences which are different from those in the past.

To provide multimedia content, each service involves storage and management of media content, and storage and management of users' play strategies and other data. At present, there is no effective solution as to how to store and manage media content and how to store and manage users' play strategies.

### SUMMARY

The present invention is proposed in consideration of the problems in relevant technologies that a technology is required to answer how to store and manage media content and how to store and mange users' play strategies. For this reason, the present invention is largely aimed to provide a media resource system and a media resource providing method to solve the above-mentioned problems.

A media resource system is provided according to one aspect of the present invention to provide media resources for a value-added service.

A media resource system according to an embodiment of the present invention includes: a service processing module, which is used to process the media resource system logically; a user configuration information module, which is used to set and/or store service-related user configuration information; and a resource storage and management module, which is used to store media resources and manage the media resources.

Moreover, the resource storage and management module may further include: a media resource storage module, which is used to store the media resources; and a resource management module, which is used to manage the media resources stored in the media resource storage module.

Wherein, the resource management module manages the media resources stored in the media resource storage module, including at least one of the following: media resource ID, the physical storage position of the media resources and the media format.

Moreover, the resource management module may be further used to receive a resource operation request and notify the media resource storage module to execute relevant operations on the media resources according to the resource operation request.

Moreover, the system may further include: a media server, which is used to provide a media resource negotiation with and remote playing to a client through a network, and/or support the client to play the media resources in way of WEB or local downloading, and receive interaction information from the client and report it if necessary.

Wherein the service processing module processes the media resource system logically, including at least one of the following: positioning media resources according to a predefined strategy; providing a calling interface to a peripheral service/application server; providing user configuration information updating and acquisition to a service gate and/or a management gate; providing media resource configuration operations to the service gate and/or the management gate; accepting authentication requests and calling requests from the service gate and/or the management gate; and interfacing with other service application to acquire relevant service capabilities.

Moreover, the user configuration information module may be further used to provide configuration information to other modules in the media resource system.

A media resource system is proposed according to another aspect of the present invention to provide media resources for a value-added service.

A media resource system according to the present invention includes: a service processing module, which is used to process the media resource system logically; a user configuration information module, which is used to set and/or store service-related user configuration information; a resource storage and management module, which is used to store media resources and manage the stored media resources; and a media server, which is used to implement a media negotiation between a calling user and a called user and implement media playing.

Moreover, the resource storage and management module may further include: a media resource storage module, which is used to store the media resources; and a resource management module, which is used to manage the media resources stored in the media resource storage module.

A media resource providing method is provided according to another aspect of the present invention.

A media resource providing method according to an embodiment of the present invention includes: a service processing module receives a media resource request from a service, reads user configuration from a user configuration information module, and acquires a corresponding media resource ID according to the media resource request and the user configuration; the service processing module sends a request for positioning media resources to a resource management module, wherein the request for positioning media resources includes the media resource ID; the resource management module acquires media resource information according to the media resource ID in the request for positioning media resources and returns the media resource information back to the service processing module; if a system does not include a media server, the service processing module returns the media resource information back to the service, so that the service acquires the media resources according to the media resource information; if a system includes a media server, the service processing module interacts with the service, a client and the media server, and instructs the media server to implement a media negotiation with and media playing to the client according to the media resource information; or the service processing module interacts with the service and the client, and instructs the client to play the media resources in the media server in way of local downloading or WEB according to the media resource information; or the service processing module returns the media resource information back to the service.

Moreover, the method may further include: the service sends a media playing request to the media server, wherein the media playing request includes the media resource information; and the media server acquires the media resources stored in the media resource storage module according to the media resource information and playing the media resources.

Wherein, the media resource information may be physical position information of the media resources.

Wherein, the resource management module and the media resource storage module may be set into one functional entity.

An early media realizing method for a media resource system is provided according to yet another aspect of the present invention.

An early media realizing method for a media resource system according to the present invention includes: an early media service server sends a request applying for media resources to a service processing module in a media resource system, wherein the request applying for media resources contains information about the media resources applied for in the request applying for media resources; responding to the request applying for media resources, the service processing module implements predefined processing according to the request applying for media resources, acquiring corresponding media resource information, and returns the media resource information back to the early media service server; the early media service server sends a playing request to a media server in the media resource system, wherein the playing request includes the media resource information; and responding to the playing request, the media server acquires media in a resource storage and management module in the media resource system according to the media resource information and playing the media.

Moreover, before the early media service server sends a request applying for media resources to the service processing module in the media resource system, the method may further include: a calling user initiates a call and triggers the early media service server, and then the early media service server connects the call to a called user.

Wherein the service processing module implements predefined processing according to the request applying for media resources, acquires corresponding media resource information, and returns the media resource information back to the early media service server, specifically including that: responding to the request applying for media resources, the service processing module reads user configuration from a user configuration information module and acquires a corresponding media resource ID according to the media resource request and the user configuration; the service processing module sends a request for positioning media resources to the resource storage and management module, wherein the request for positioning media resources includes the media resource ID; the resource storage and management module acquires media resource information according to the media resource ID in the request for positioning media resources and returns the media resource information back to the service processing module; and the service processing module returns the media resource information back to the early media service server.

Moreover, before the early media service server instructs the media server to play the media, the method may further include: the media server implements a media negotiation with a client under the control of the early media service server.

Wherein the necessary information about the media resources applied for in the request applying for media resources may at least include: the number of the calling user and the number of the called user.

Wherein, the early media may include: CRBT and MRT.

An early media realizing method for a media resource system is provided according to yet another aspect of the present invention.

An early media realizing method for a media resource system according to the present invention includes that: an early media service server sends a request applying for media resources to a media resource system, wherein the request applying for media resources contains necessary information about the media resources applied for; responding to the request applying for media resources, the media resource system implements predefined processing according to the request applying for media resources, acquires media resource information, and returns the media resource information back to the early media service server; the early media service server sends a playing request to a media server, wherein the playing request includes the media resource information; and responding to the playing request, the media server acquires media in the media resource system according to the media resource information, and plays the media.

Moreover, before the early media service server sends a request applying for media resources to the media resource system, the method may further include: a calling user initiates a call and triggers the early media service server, and the early media service server connects the call to a called user.

Wherein the media resource system implements predefined processing according to the request applying for media resources, acquires media resource information, and returns the media resource information back to the early media service server, specifically including that: responding to the request applying for media resources, a service processing module in the media resource system reads user configuration from a user configuration information module and acquires a corresponding media resource ID according to the media resource request and the user configuration; the service processing module sends a request for positioning media resources to the resource storage and management module, wherein the request for positioning media resources includes the media resource ID; the resource storage and management module acquires media resource information according to the media resource ID in the request for positioning media resources and returns the media resource information back to the service processing module; and the service processing module returns the media resource information back to the early media service server.

Moreover, before the early media service server sends a playing request to the media server in the media resource system, the method may further include: the media server implements a media negotiation with the calling user and the called user.

Wherein the relevant information about the media resources applied for contained in the request applying for media resources may at least include: the number of the calling user and the number of the called user.

A method for realizing ring tone notification of short message arrival in a media resource system is provided according to yet another aspect of the present invention.

A method for realizing ring tone notification of short message arrival in a media resource system according to the present invention includes that: a short message value-added service server sends a request applying for media resources to a media resource system, wherein the request applying for media resources includes relevant information about the media resources applied for; responding to the request applying for media resources, the media resource system implements predefined processing according to the request applying for media resources, acquires relevant media resource information, and returns the media resource information back to the short message value-added service server; the short message value-added service server adds a link of the media resource information to a short message sent by a calling user and sends the short message to a called user; and the called user receives the short message, downloads media from a resource storage and management module according to the link of the media resource information and then plays the media.

Moreover, before the short message value-added service server sends a request applying for media resources to the media resource system, the method may further include: the calling user subscribes a ring tone notification service on short message arrival and sends the short message, the short message arrives at the short message value-added service server.

Wherein the media resource system implements predefined processing according to the request applying for media resources, acquires corresponding media resource information, and returns the media resource information back to the short message value-added service server, specifically including that: responding to the request applying for media resources, a service processing module in the media resource system reads user configuration from a user configuration information module and acquires a corresponding media resource ID according to the media resource request and the user configuration; the service processing module sends a request for positioning media resources to the resource storage and management module, wherein the request for positioning media resources includes the media resource ID; the resource storage and management module acquires media resource information according to the media resource ID in the request for positioning media resources and returns the media resource information back to the service processing module; and the service processing module returns the media resource information back to the short message value-added service server.

Depending on the technical solution of the present invention, personalized media resource playing of a variety of services could be realized in such a manner that these services use a suit of media resource system commonly, thereby reducing the construction and deployment cost of each service system and facilitating user's operation and system maintenance.

Other features and advantages of the present invention will be expounded in the subsequent specification and partially become obvious in the specification, or could be understood by implementing the present invention. The aim and other advantages of the present invention may be realized and acquired through the structures particularly indicated in the Description, Claims and Drawings.

### BRIEF DESCRIPTION OF THE DRAWINGS

The drawings are intended to provide further understanding to the present invention and constitute one part of the Description. The drawings are intended to explain the present invention in connection with embodiments of the present invention but not to limit the present invention. In the drawings:
Fig. 1 is a schematic diagram illustrating a media resource system according to an embodiment of the present invention;
Fig. 2 is a flow chart illustrating a media resource providing method according to an embodiment of the present invention;
Fig. 3 is a flow chart illustrating resource management realization according to an embodiment of the present invention;
Fig. 4 is a flow chart illustrating how to set service-related user configuration information processing in a user configuration information module according an embodiment of the present invention;
Fig. 5 is a flow chart illustrating an early media realizing method for a media resource system according to Implementation 1 of an embodiment of the present invention;
Fig. 6 is a flow chart illustrating an early media realizing method for a media resource system according to Implementation 2 of an embodiment of the present invention;
Fig. 7 is a flow chart illustrating CRBT service implementing media playing according to an embodiment of the present invention;
Fig. 8 is a flow chart illustrating a method for realizing ring tone notification of short message arrival for a media resource system according to an embodiment of the present invention; and
Fig. 9 is a flow chart illustrating media playing of short message arrival notification according to an embodiment of the present invention.

### DETAILED DESCRIPTION

### Functional Overview

At present, as users step up their demands for personalized services, there exist many personalized value-added services, moreover, each service involves storage and management of media content, and storage and management of users' play strategies and other data, and the operation of each service requires high construction and deployment cost.

In view of the above, the present invention provides a media resource system and a media resource providing method using such a system, this method separates storage and management of media content, and storage and management of users' play strategies and other data from specific services and makes them a component for common use, which facilitates different value-added services to realize features related to personalized media playing.

Preferred embodiments of the present invention are described in combination with the drawings hereinafter. It should be understood that the preferred embodiments described herein are only intended to illustrate and explain but not limit the present invention.

### System Embodiment

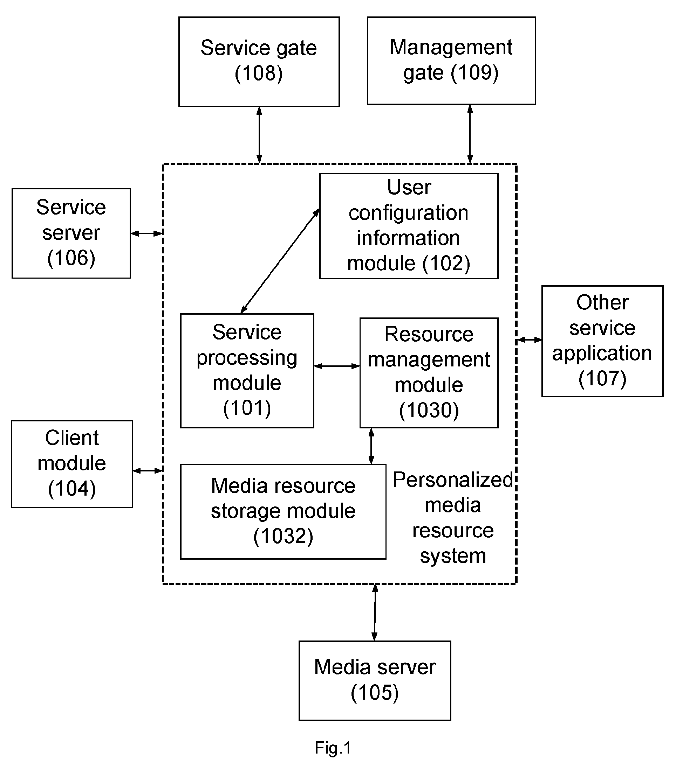

A media resource system is proposed according to an embodiment of the present invention for providing media resources to a value-added service. The personalized media resource system as shown in Fig. 1 mainly includes: a service processing module 101, a user configuration information module 102, a resource storage and management module 103 (including a resource management module 1030 and a media resource storage module 1032), a client module 104, a media server 105, a service server 106, other service application 107, a service gate 108, and a management gate 109; wherein the media server 105, the service server 106, other service application 107, the service gate 108 and the management gate 109 are peripheral functional entities of this system.

The functions of the above-mentioned modules are described in detail hereinafter.

The service processing module 101, which is connected to the user configuration information module 102 and the resource storage and management module 103, is largely used to process the media resource system logically and provide an interface for peripheral functional entities, and the interface can be realized through message interaction, remote calling and API, etc.; this module can also be used to analyze the information contained in a request from the service server, e.g. the number of a calling/called user; moreover, this module positions the physical position of user personalized configured media resource by matching with records in the user configuration information module to provide a media resource positioning function to the service server.

In the specific implementation, the service processing module 101 authenticates a user information configuration request initiated by the service gate and forwards the user information configuration request to the user configuration information module 102 for processing. The service processing module 101 authenticates a media resource management operation request initiated by the management gate and forwards the media resource management operation request to the resource storage and management module 103. Moreover, the service processing module 101 is also used to provide operations such as uploading, updating and deleting media resources to a third party management gate, etc.

The user configuration information module 102, which is connected to the service processing module 101, stores service-related user preference configuration information and provides the user preference configuration information to a user or third party application or other modules, so that the user or third party application can set the user configuration information in various forms, wherein the user preference configuration information is realized in the form of a table and XML file. Moreover such information contains the number of a calling user (a called user), time, place, occasion, way of presentation, etc.

For the user configuration information module 102, if parameters in the user personalized configuration recorded by it is required to call peripheral other service application, then the module will initiate the process of calling other service application; if the parameters in the user personalized configuration recorded by it is required to interact with the user, the module will initiate or receive interaction process from the client module.

The resource storage and management module 103 (including the resource management module 1030 and the media resource storage module 1032) is used to store media resources and manage the stored media resources.

The resource management module 1030, which is connected to the service processing module 101 and the media resource storage module 1032, is used to manage information about the media resources stored in the media resource storage module, and the information may include unified network codes of the media resources (media resource IDs), the physical storage position of the media resources and the media format; and the module is also used to receive a resource operation request and notify the media resource storage module 1032 to execute operations such as adding, updating and deleting the media resources.

The media resource storage module 1032, which is connected to the resource management module 1030, is used to store the media resources and provide media files for media server equipment which is responsible for media playing in networks; and the module is also used to execute resource operation instructions of the resource management module 1030.

The client module 104, which is connected to the media resource system, is used to fulfill user simple configuration information function and realize interaction between the service processing module 101 and users.

The media server 105 is used to provide a media resource negotiation with and remote playing to the client by a network, and/or support the client to play the media resoruces in way of WEB or local downloading, as well as receive interaction information from the client and report it when necessary.

It should be noted that, in practical application, the media server 105 may be set in the above-mentioned media resource system, i.e. the media resource system may include the media server 105. In addition, the media server 105 may be independent of the media resource system according to the practical situation, i.e. the media server 105 may be set separately.

The service server 106, which is connected to the media resource system, may be a server in a network for realizing a specific service, e.g. a CRBT service server, an MRT service server, a multimedia conference server, a message service server, etc.

The other service application 107, which is connected to the media resource system, is required to have service capabilities which can be reused or called, e.g. grouping, positioning, presentation and other service capabilities.

The service gate 108, which is connected to the media resource system, is used to provide personalized configuration and a service management gate to users, SPs (service providers) and network equipment operators, e.g. a CRBT service gate, it provides users with different coloring ring tones which are set according to a time period, date, different groups of calling users and different position information. The gate can be provided to users to realize various forms of access and personalized service configuration, e.g. SMS, IVR, WAP access, etc.; wherein the various forms of access may also be realized by providing an interface to the service processing module in the system.

The management gate 109, which is connected to the media resource system, is used to realize functions such as media content generation, content release, content management and media resource management in a network, e.g. CP content uploading, copyright processing, content review, content release, unified network code allocation of processed and produced media resources, and adding a media resource storage module uploaded into the media resource system.

### Embodiment 1 of the method

A media resource providing method is provided according to an embodiment of the present invention.

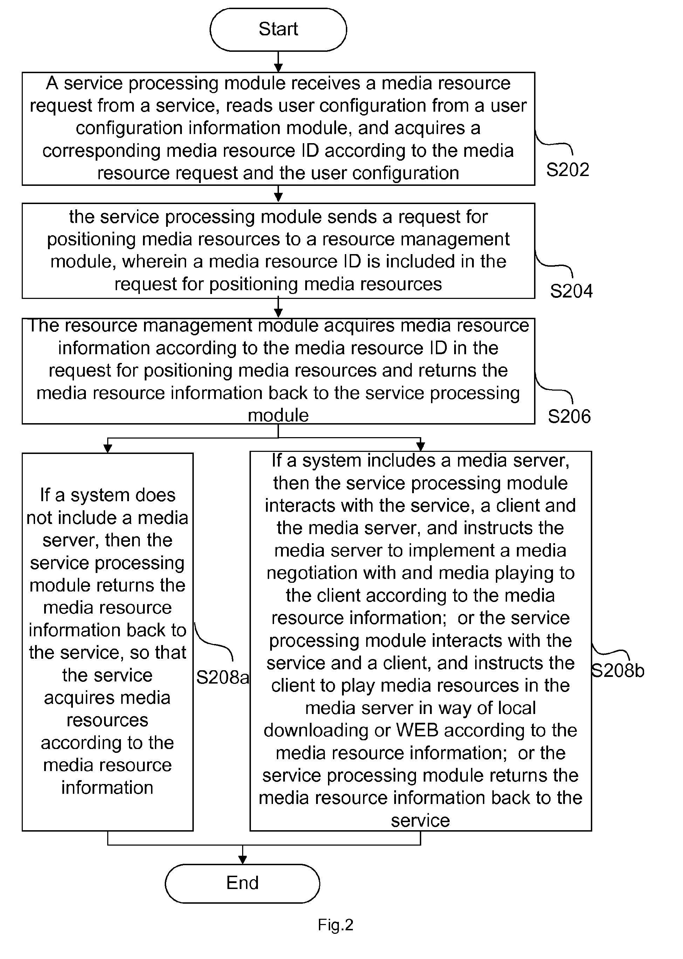

Fig. 2 is a flow chart illustrating a media resource providing method according to an embodiment of the present invention. As shown in Fig. 2, the method includes the following operations (steps S202 to S208).

Step S202: a service processing module receives a media resource request from a service, reads user configuration from a user configuration information module, and acquires a corresponding media resource ID according to the media resource request and the user configuration.

Step S204: the service processing module sends a request for positioning media resources to a resource management module, wherein a media resource ID is included in the request for positioning media resources.

Step S206: the resource management module acquires media resource information according to the media resource ID in the request for positioning media resources and returns the media resource information back to the service processing module.

Step S208a: if a system does not include a media server, then the service processing module returns the media resource information back to the service, so that the service acquires media resources according to the media resource information.

Step S208b: if a system includes a media server, then the service processing module interacts with the service, a client and the media server, and instructs the media server to implement a media negotiation with and media playing to the client according to the media resource information; or the service processing module interacts with the service and a client, and instructs the client to play media resources in the media server in way of local downloading or WEB according to the media resource information; or the service processing module returns the media resource information back to the service.

After the step S208a or S208b, the service sends a media playing request to the media server, wherein the media resource information is included in the media playing request; the media server acquires the media resources stored in a media resource storage module according to the media resource information and plays them, wherein the media resource information may be the physical position information of the media resources.

In practical application, the media server may be set into a whole one with the media resource system or set separately from the media resource system. In addition, the resource management module and the media resource storage module may be set as one functional entity, or the resource management module and the media resource storage module may be set separately.

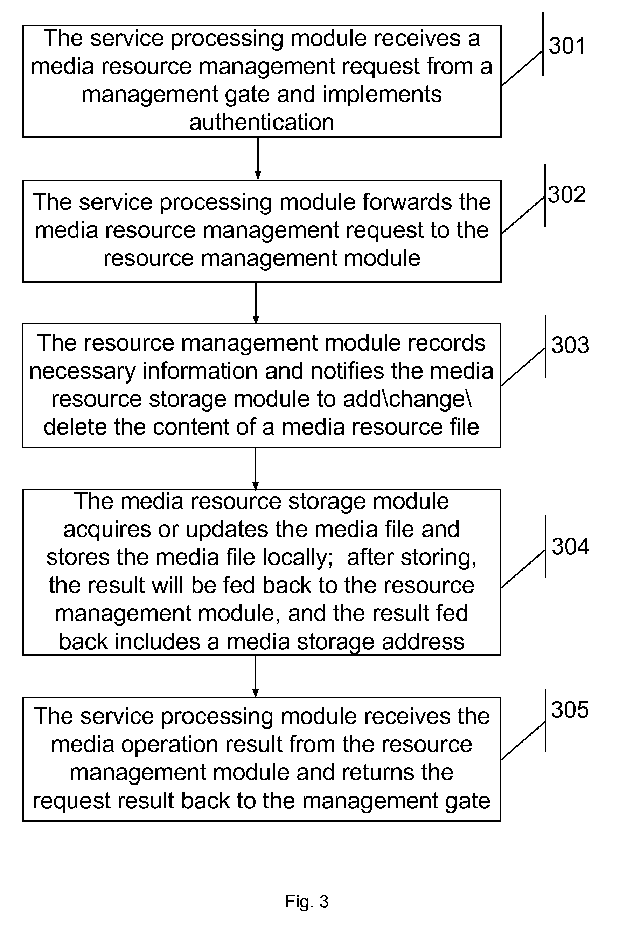

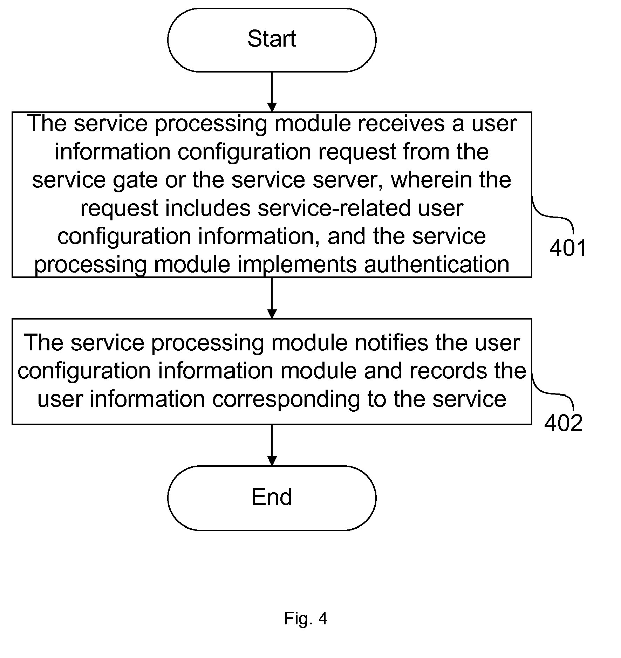

The method as shown in Fig. 2 will be illustrated below based on the system as shown in Fig. 1 in combination with Fig. 3 and Fig. 4.

Based on the system and peripheral functional entities in the embodiment of the system as above, Fig. 3 illustrates a flow of media resource management process, e.g. adding, changing and deleting media resources and other operations, including the following operations (steps 301 to 305).

Step 301: the service processing module receives a media resource management request from a management gate and implements authentication.

Step 302: the service processing module forwards the media resource management request to the resource management module, wherein specific operating instructions are included in the request, e.g. an add operation, and the request contains unified network codes of media resources and a resource storage directory and other information.

Step 303: the resource management module records necessary information, including the unified network codes of the media resources, and notifies the media resource storage module to add\change\delete the content of a media resource file.

Step 304: if it is necessary to add or change the content of the media resource file, then the media resource storage module acquires or updates the media file and stores the media file locally; after storing, the result will be fed back to the resource management module, wherein the result fed back includes a media storage address; if it is necessary to delete the content of the media resource file, then the media file will be deleted and the result will be fed back to the resource management module.

Step 305: the service processing module receives the media operation result from the resource management module and returns the request result back to the management gate.

Through the operations as above, functions such as adding, changing and deleting the media resources are realized.

In addition, based on the above-mentioned system and the peripheral functional entities, Fig. 4 shows a flow that the service sets service-related user configuration information processing in the user configuration information module, including the following operations (steps 401 to 402).

Step 401: the service processing module receives a user information configuration request from the service gate or the service server, wherein the request includes service-related user configuration information, and the service processing module implements authentication according to the request.

Step 402: the service processing module notifies the user configuration information module and records the user information corresponding to the service.

Through the above-mentioned operations, it is achieved that the service-related user configuration information is set in the user configuration information module.

### Embodiment 2 of the method

Implementation 1, a media resource system includes a media server.

An early media realizing method for a media resource system is provided according to the embodiment of the present invention.

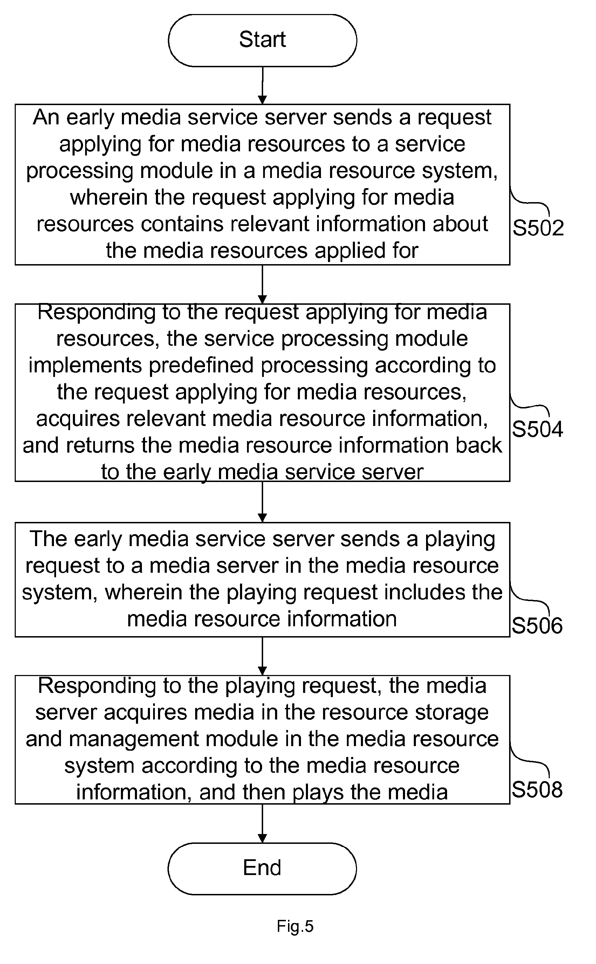

Fig. 5 is a flow chart illustrating the early media realizing method for a media resource system according to Implementation 1 of the embodiment of the present invention, including the following operations (steps S502 to S508).

Step S502: an early media service server sends a request applying for media resources to a service processing module in a media resource system, wherein the request applying for media resources contains relevant information about the media resources applied for, and the relevant information about the media resources includes at least one of the following: the numbers of a calling user and a called user, and in practical application, early media may be CRBT or MBT.

In step S502, before the early media service server sends a request applying for media resources to the service processing module in the media resource system, the following operations are required: the calling user initiates a call to trigger the early media service server, and then the early media service server connects the call to the called user.

Step S504: responding to the request applying for media resources, the service processing module implements predefined processing according to the request applying for media resources, acquires relevant media resource information, and returns the media resource information back to the early media service server.

Specifically, the operation that the service processing module implements predefined processing, acquires relevant media resource information and returns the media resource information back to the early media service server may be realized through the following steps: 1. responding to the request applying for media resources, the service processing module reads user configuration from a user configuration information module and acquires a corresponding media resource ID according to the media resource request and the user configuration; 2. the service processing module sends a request for positioning media resources to a resource storage and management module, wherein the request for positioning media resources includes the media resource ID; 3. the resource storage and management module acquires media resource information according to the media resource ID in the request for positioning media resources, and returns the media resource information back to the service processing module; and 4. the service processing module returns the media resource information back to the early media service server.

Step S506: the early media service server sends a playing request to a media server in the media resource system, wherein the playing request includes the media resource information.

In step S506, before the early media service server instructs the media server to play, the media server may implement a media negotiation with a client under the control of the early media service server.

Step S508: responding to the playing request, the media server acquires media in the resource storage and management module in the media resource system according to the media resource information, and then plays the media.

Implementation 2: a media resource system does not include a media server, i.e. the media server is independent of the media resource system.

An early media realizing method for the media resource system is provided according to the embodiment of the present invention.

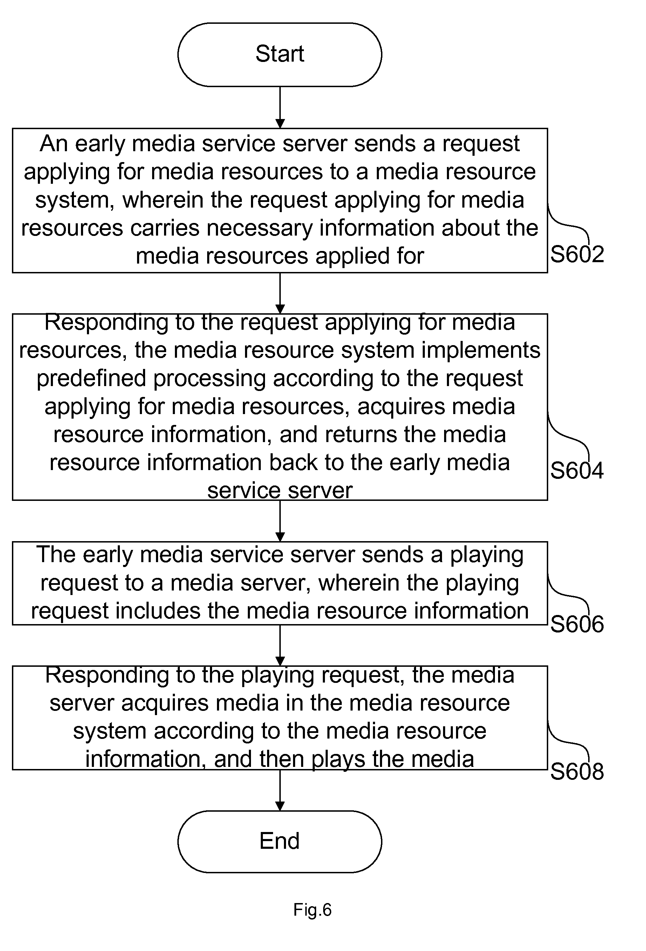

Fig. 6 is a flow chart illustrating the early media realizing method for the media resource system according to Implementation 2 of the embodiment of the present invention, including the following operations (steps S602 to S608).

Step S602: an early media service server sends a request applying for media resources to a media resource system, wherein the request applying for media resources carries necessary information about the media resources applied for, and the necessary information about the media resources applied for includes at least one of the following: the numbers of a calling user and a called user.

In step S602, before the early media service server sends a request applying for media resources to the media resource system, the following operations are required: the calling user initiates a call to trigger the early media service server, and then the early media service server connects the call to the called user.

Step S604: responding to the request applying for media resources, the media resource system implements predefined processing according to the request applying for media resources, acquires media resource information, and returns the media resource information back to the early media service server.

In step S604, the operation that the media resource system implements predefined processing according to the request applying for media resources, acquires media resource information and returns the media resource information back to the early media service server may be realized through the following steps: 1. responding to the request applying for media resources, a service processing module in the media resource system reads user configuration from a user configuration information module and acquires a corresponding media resource ID according to the media resource request and the user configuration; 2. the service processing module sends a request for positioning media resources to a resource storage and management module, wherein the request for positioning media resources includes the media resource ID; 3. the resource storage and management module acquires media resource information according to the media resource ID in the request for positioning media resources, and returns the media resource information back to the service processing module; and 4. the service processing module returns the media resource information back to the early media service server.

Step S606: the early media service server sends a playing request to a media server, wherein the playing request includes the media resource information.

In Step S606, before the early media service server sends a playing request to the media server in the media resource system, the media server may implement a media negotiation with the calling user and the called user.

Step S608: responding to the playing request, the media server acquires media in the media resource system according to the media resource information, and then plays the media.

The above-mentioned technical solution will be described in detail hereinafter by taking CRBT service as an example.

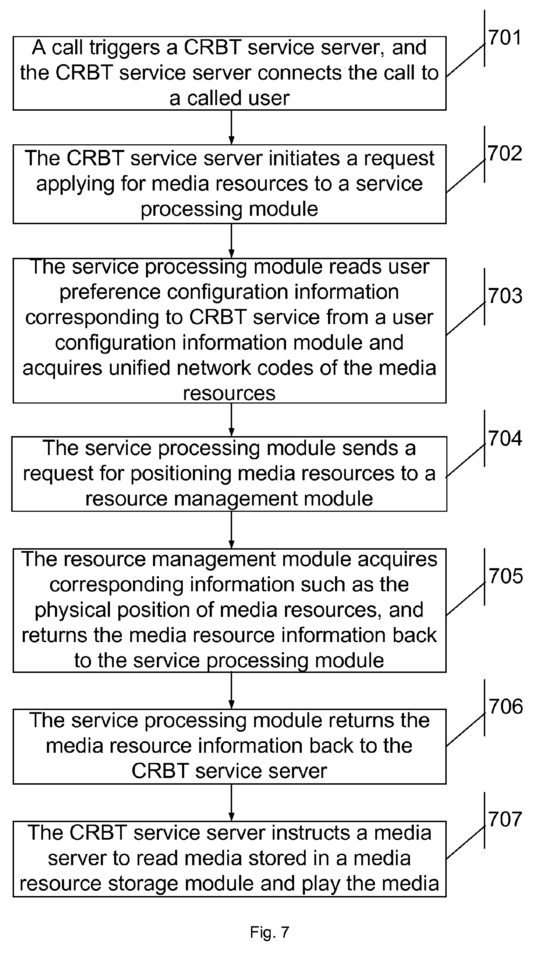

Fig. 7 is a flow chart illustrating CRBT service implementing media playing by using a personalized media resource system according to the present invention, including the following steps (steps 701 to 707).

Step 701: a calling user initiates a call, the call triggers a CRBT service server, and the CRBT service server connects the call to a called user.

Step 702: the CRBT service server initiates a request applying for media resources to a service processing module in a media resource system, wherein the request includes necessary information, e.g. the number of the calling user and/or the number of the called user, etc..

Step 703: the service processing module reads corresponding user preference configuration information from a user configuration information module and compares the user preference configuration information read out with the information in the request, e.g. reading a CRBT code set by the user for the calling number; if present information of the called user is required, then the service processing module calls presentation service application, acquires the status of the called user, reads the CRBT code set by the user for the calling number and the status of the called user, and finally acquires unified network codes of the corresponding media resources in the user preference configuration information.

Step 704: the service processing module sends a request for positioning media resources to a resource management module, wherein the request includes the unified network codes of the media resources.

Step 705: the resource management module acquires corresponding information such as the physical position of media resources according to content of the request and returns media resource information back to the service processing module.

Step 706: the service processing module returns the media resource information back to the CRBT service server.

Step 707: the CRBT service server initiates a session to media server equipment in a network (the media server equipment may be set into a whole one with the media resource system or may be independent of the media resource system); after a media negotiation between the media server and the calling user is completed, the CRBT service server initiates a playing request to the media server according to the acquired media resource information, wherein the request contains the media resource information, and the media server reads media stored in a media resource storage module to play.

Through the above-mentioned operations, the media playing of the CRBT service is realized.

### Embodiment 3 of the method

A method for realizing ring tone notification of short message arrival for a media resource system is provided according to the embodiment of the present invention.

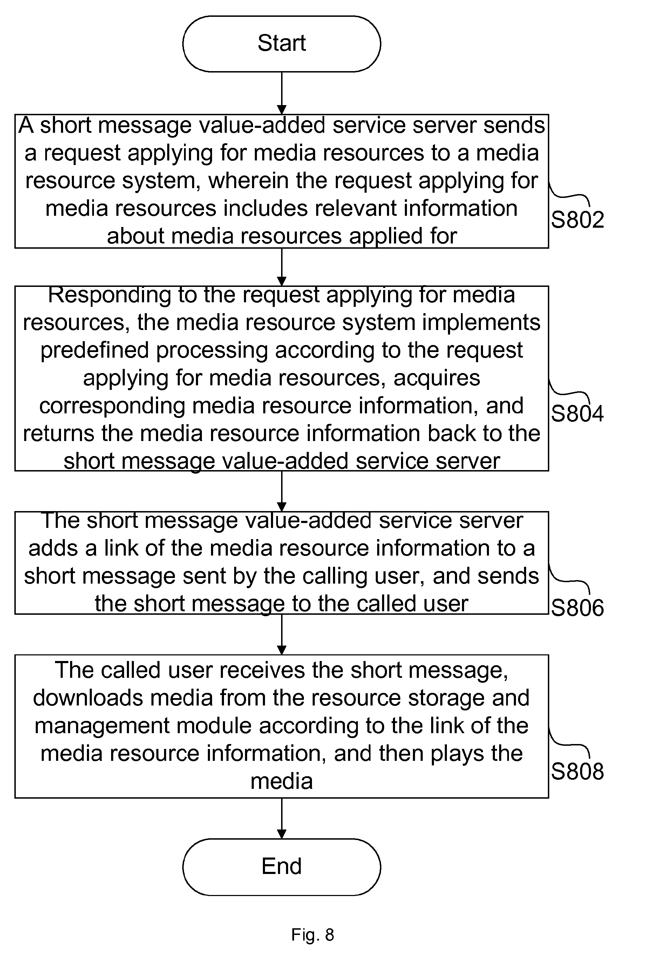

Fig. 8 is a flow chart illustrating a method for realizing ring tone notification of short message arrival for a media resource system according to an embodiment of the present invention, including the following operations (steps S802 to S808).

Step S802: a short message value-added service server sends a request applying for media resources to a media resource system, wherein the request applying for media resources includes relevant information about media resources applied for.

In step S802, before the short message value-added service server sends a request applying for media resources to the media resource system, a calling user may subscribe a ring tone notification service on short message arrival and send a short message, and then the short message arrives at the short message value-added service server.

Step S804: responding to the request applying for media resources, the media resource system implements predefined processing according to the request applying for media resources, acquires corresponding media resource information, and returns the media resource information back to the short message value-added service server.

In step S804, the operation that the media resource system implements predefined processing according to the request applying for media resources, acquires corresponding media resource information and returns the media resource information back to the short message value-added service server specifically includes that: 1. responding to the request applying for media resources, a service processing module in the media resource system reads user configuration from a user configuration information module and acquires a corresponding media resource ID according to the media resource request and the user configuration; 2. the service processing module sends a request for positioning media resources to a resource storage and management module, wherein the request for positioning media resources includes the media resource ID; 3. the resource storage and management module acquires media resource information according to the media resource ID in the request for positioning media resources, and returns the media resource information back to the service processing module; and 4. the service processing module returns the media resource information back to the short message value-added service server.

Step S806: the short message value-added service server adds a link of the media resource information to a short message sent by the calling user, and sends the short message to the called user.

Step S808: the called user receives the short message, downloads media from the resource storage and management module according to the link of the media resource information, and then plays the media.

The above-mentioned technical solution will be described in detail hereinafter in combination with the drawing.

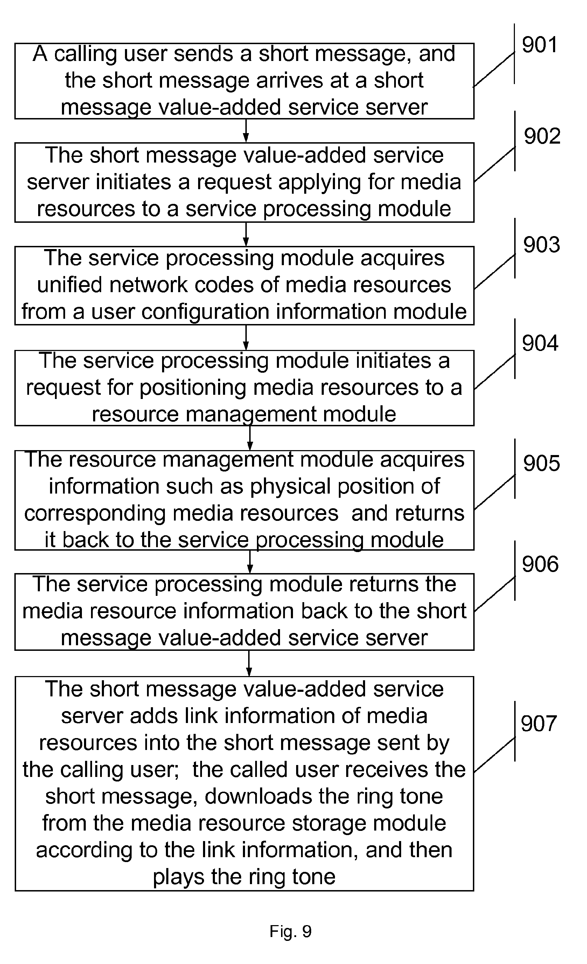

Fig. 9 shows a media playing flow of accomplishing the notification of short message arrival according to the embodiment of the present invention, including the following operations (steps 901 to 907).

Step 901: a calling user subscribes a ring tone notification of short message arrival of a short message value-added service, and sends a short message, which arrives at a short message value-added service server.

Step 902: the short message value-added service server initiates a request applying for media resources to a service processing module in a media resource system, wherein the request includes necessary information, e.g. the number of the calling user and/or the number of the called user, etc..

Step 903: the service processing module reads corresponding user preference configuration information from a user configuration information module, compares the user preference configuration information read out with the information in the request, and acquires unified network codes of corresponding media resources in the user preference configuration.

Step 904: the service processing module initiates a request for positioning media resources to a resource management module, wherein the request includes the unified network codes of media resources.

Step 905: the resource management module acquires information such as physical position of corresponding media resources according to content of the request, and returns media resource information back to the service processing module.

Step 906: the service processing module returns the media resource information back to the short message value-added service server.

Step 907: the short message value-added service server adds link information of media resources into the short message sent by the calling user and sends the short message to the called user; and the called user receives the short message, downloads the ring tone from the media resource storage module according to the link information, and then plays the ring tone.

Through the above-mentioned operations, the media playing function of short message arrival notification is realized.

In summary of the above, by applying the technical solutions of the present invention, personalized media resource playing could be realized in such a manner that a variety of services use a suit of media resource system commonly, thereby reducing the construction and deployment cost of every service system and facilitating system maintenance and usage.

The foregoing descriptions are only preferred embodiments of the present invention and are not intended to limit the present invention. For those skilled in the art, the present invention may have various changes and modifications. Any and all modifications, equivalent substitute and improvements made without departing from the spirit and principle of the present invention shall be included within the protection scope of the present invention.

## Claims

1. A media resource system, which is used for providing media resources to a value-added service, including:
a service processing module, which is used to process the media resource system logically;
a user configuration information module, which is used to set and/or store service-related user configuration information; and
a resource storage and management module, which is used to store media resources and manage the media resources.

2. The system according to claim 1, wherein the resource storage and management module further includes:
a media resource storage module, which is used to store the media resources; and
a resource management module, which is used to manage the media resources stored in the media resource storage module.

3. The system according to claim 2, wherein the resource management module manages the media resources stored in the media resource storage module, including at least one of the following: media resource ID, the physical storage position of the media resources and the media format.

4. The system according to claim 3, wherein the resource management module is further used to receive a resource operation request and notify the media resource storage module to execute relevant operations on the media resources according to the resource operation request.

5. The system according to claim 1, further including:
a media server, which is used to provide a media resource negotiation with and remote playing to a client through a network, and/or support the client to play the media reosurces in way of WEB or local downloading, and receive interaction information from the client and report it if necessary.

6. The system according to claim 1, wherein the service processing module processes the media resource system logically, including at least one of the following:
positioning media resources according to a predefined strategy;
providing a calling interface to a peripheral service/application server;
providing user configuration information updating and acquisition to a service gate and/or a management gate;
providing media resource configuration operations to the service gate and/or the management gate;
accepting authentication requests and calling requests from the service gate and/or the management gate; and
interfacing with other service application to acquire relevant service capabilities.

7. The system according to claim 1, wherein the user configuration information module is further used to provide configuration information to other modules in the media resource system.

8. A media resource system, which is used for providing media resources to a value-added service, including:
a service processing module, which is used to process the media resource system logically;
a user configuration information module, which is used to set and/or store service-related user configuration information;
a resource storage and management module, which is used to store media resources and manage the stored media resources; and
a media server, which is used to implement a media negotiation between a calling user and a called user and implement media playing.

9. The system according to claim 8, wherein the resource storage and management module further includes:
a media resource storage module, which is used to store the media resources; and
a resource management module, which is used to manage the media resources stored in the media resource storage module.

10. A media resource providing method, including:
a service processing module receiving a media resource request from a service, reading user configuration from a user configuration information module, and acquiring a corresponding media resource ID according to the media resource request and the user configuration;
the service processing module sending a request for positioning media resources to a resource management module, wherein the request for positioning media resources includes the media resource ID;
the resource management module acquiring media resource information according to the media resource ID in the request for positioning media resources and returning the media resource information back to the service processing module;
if a system does not include a media server, the service processing module returning the media resource information back to the service, so that the service acquiring the media resources according to the media resource information;
if a system includes a media server, the service processing module interacting with the service, a client and the media server, and instructing the media server to implement a media negotiation with and media playing to the client according to the media resource information; or the service processing module interacting with the service and the client, and instructing the client to play the media resources in the media server in way of local downloading or WEB according to the media resource information; or the service processing module returning the media resource information back to the service.

11. The method according to claim 10, further including:
the service sending a media playing request to the media server, wherein the media playing request includes the media resource information; and
the media server acquiring the media resources stored in the media resource storage module according to the media resource information and playing the media resources.

12. The method according to claim 11, wherein the media resource information is physical position information of the media resources.

13. The method according to claim 10 or claim 11, wherein the resource management module and the media resource storage module are set into one functional entity.

14. An early media realizing method for a media resource system, including:
an early media service server sending a request applying for media resources to a service processing module in a media resource system, wherein the request applying for media resources contains information about the media resources applied for in the request applying for media resources;
responding to the request applying for media resources, the service processing module implementing predefined processing according to the request applying for media resources, acquiring corresponding media resource information, and returning the media resource information back to the early media service server;
the early media service server sending a playing request to a media server in the media resource system, wherein the playing request includes the media resource information; and
responding to the playing request, the media server acquiring media in a resource storage and management module in the media resource system according to the media resource information and playing the media.

15. The method according to claim 14, before the early media service server sends a request applying for media resources to the service processing module in the media resource system, the method further including:
a calling user initiating a call and triggering the early media service server, and then the early media service server connecting the call to a called user.

16. The method according to claim 15, wherein the service processing module implements predefined processing according to the request applying for media resources, acquires corresponding media resource information, and returns the media resource information back to the early media service server, specifically including that:
responding to the request applying for media resources, the service processing module reads user configuration from a user configuration information module and acquires a corresponding media resource ID according to the media resource request and the user configuration;
the service processing module sends a request for positioning media resources to the resource storage and management module, wherein the request for positioning media resources includes the media resource ID;
the resource storage and management module acquires media resource information according to the media resource ID in the request for positioning media resources and returns the media resource information back to the service processing module; and
the service processing module returns the media resource information back to the early media service server.

17. The method according to claim 16, before the early media service server instructs the media server to play the media, the method further including:
the media server implementing a media negotiation with a client under the control of the early media service server.

18. The method according to claim 14, wherein the necessary information about the media resources applied for in the request applying for media resources at least includes: the number of the calling user and the number of the called user.

19. The method according to claim 14, wherein the early media include: CRBT and MRT.

20. An early media realizing method for a media resource system, including:
an early media service server sending a request applying for media resources to a media resource system, wherein the request applying for media resources contains necessary information about the media resources applied for;
responding to the request applying for media resources, the media resource system implementing predefined processing according to the request applying for media resources, acquiring media resource information, and returning the media resource information back to the early media service server;
the early media service server sending a playing request to a media server, wherein the playing request includes the media resource information; and
responding to the playing request, the media server acquiring media in the media resource system according to the media resource information, and playing the media.

21. The method according to claim 20, before the early media service server sends a request applying for media resources to the media resource system, the method further including:
a calling user initiating a call and triggering the early media service server, and the early media service server connecting the call to a called user.

22. The method according to claim 21, wherein the media resource system implements predefined processing according to the request applying for media resources, acquires media resource information, and returns the media resource information back to the early media service server, specifically including that:
responding to the request applying for media resources, a service processing module in the media resource system reads user configuration from a user configuration information module and acquires a corresponding media resource ID according to the media resource request and the user configuration;
the service processing module sends a request for positioning media resources to the resource storage and management module, wherein the request for positioning media resources includes the media resource ID;
the resource storage and management module acquires media resource information according to the media resource ID in the request for positioning media resources and returns the media resource information back to the service processing module; and
the service processing module returns the media resource information back to the early media service server.

23. The method according to claim 22, before the early media service server sends a playing request to the media server in the media resource system, the method further including:
the media server implementing a media negotiation with the calling user and the called user.

24. The method according to claim 20, wherein the relevant information about the media resources applied for contained in the request applying for media resources at least includes: the number of the calling user and the number of the called user.

25. A method for realizing ring tone notification of short message arrival for a media resource system, including:
a short message value-added service server sending a request applying for media resources to a media resource system, wherein the request applying for media resources includes relevant information about the media resources applied for;
responding to the request applying for media resources, the media resource system implementing predefined processing according to the request applying for media resources, acquiring relevant media resource information, and returning the media resource information back to the short message value-added service server;
the short message value-added service server adding a link of the media resource information to a short message sent by a calling user and sending the short message to a called user; and
the called user receiving the short message, downloading media from a resource storage and management module according to the link of the media resource information and then playing the media.

26. The method according to claim 25, before the short message value-added service server sends a request applying for media resources to the media resource system, the method further including:
the calling user subscribing a ring tone notification service on short message arrival and sending the short message, the short message arriving at the short message value-added service server.

27. The method according to claim 26, wherein the media resource system implements predefined processing according to the request applying for media resources, acquires corresponding media resource information, and returns the media resource information back to the short message value-added service server, specifically including that:
responding to the request applying for media resources, a service processing module in the media resource system reads user configuration from a user configuration information module and acquires a corresponding media resource ID according to the media resource request and the user configuration;
the service processing module sends a request for positioning media resources to the resource storage and management module, wherein the request for positioning media resources includes the media resource ID;
the resource storage and management module acquires media resource information according to the media resource ID in the request for positioning media resources and returns the media resource information back to the service processing module; and
the service processing module returns the media resource information back to the short message value-added service server.
